# DEMANDE DE BREVET EUROPEEN

(11) **EP 0 566 338 A1**
(43) Date de publication de la demande: **20.10.1993**
(21) Numéro de dépôt: 93302818.5
(22) Date de dépôt: 08.04.1993
(51) Int. Cl.: B29C 67/00, B29C 65/18, B29C 65/26, B29C 65/30

(54) **Procédé de fermeture de bord de plaques alvéolaires**

(30) Priorité: 10.04.1992 FR 9204397
(71) Demandeur: KAYSERSBERG PACKAGING S.A., F-92402 Courbevoie Cédex (FR)
(72) Inventeur: Attili, Rolando, F-68230 Battenheim (FR); Meyer, Thierry, F-68230 Wihr au Val (FR)
(74) Mandataire: Johnson, Terence Leslie

(57) **Abrégé**

Les différentes étapes du procédé sont représentées à l'aide des figures 1A et 1E sur lesquelles on peut voir une plaque alvéolaire (1) amenée sur une table de soutien (2) par un convoyeur non représenté.

Cette plaque (1), poussée par les rouleaux du convoyeur (non représenté), glisse sur la table et vient en butée contre un dispositif de butée (4), comme représenté à la figure 1B. Un bloc presseur (3) servant à la l'immobilisation de la plaque sur la table (2) est actionné par un premier vérin (30), ou tout autre dispositif, pour venir en contact avec la plaque et appuyer celle-ci sur la table (2). Une fois le bloc presseur (3) mis en place pour appuyer la plaque (1) contre la table (2), la butée (4) est retireé au moyen d'un deuxième vérin (non représenté) qui permet de déplacer une butée (4) entre une position active où elle sert à arrêter les plaques et une position de retrait où elle est inactive. Le retrait de la butée est suffisant pour permettre le passage de la barre de soudage (5) qui est montée à l'extrémité d'un troisième vérin (55).

## Description

La présente invention concerne un procédé de fermeture des bords de plaques alvéolaires et le dispositif permettant la mise en oeuvre du procédé.

Il est con nu des procédés de fermeture des bords de plaques alvéolaires réalisées en un matériau thermoplastique tel que le polypropylène ou une autre polyoléfine. Ces plaques obtenues par extrusion sont constituées d'une couverture supérieure, d'une couverture inférieure et d'entretoises reliant les couvertures supérieure et inférieure.

On connaît par exemple un procédé de fermeture des extrémités de ces plaques, tel qu'explicité dans le brevet US 4515648, consistant à chauffer une portion d'une couverture à une température à laquelle la résine est dans l'état thermoplastique, à relier les parties extérieures des couvertures chauffées pour former un joint étanche au gaz, à maintenir cette partie chauffée à une température dans le domaine d'environ 10°C en dessous de la température à 70°C au-dessus du point de Vicat de ramollissement de la résine. Ledit panneau est chauffé pendant une durée d'au moins une minute à des températures plus hautes, et pendant 15 mn à des températures plus basses, jusqu'à ce que les tensions internes dans la région de réalisation de la soudure soient supprimées et, ensuite, à refroidir le panneau chauffé. La machine permettant la mise en oeuvre du procédé comporte des lames chauffantes qui se déplacent dans un plan perpendiculaire au plan des plaques alvéolaires de façon à ramener la couverture inférieure en direction de la couverture supérieure et/ou vis versa.

Ce procédé sur une telle machine s'applique difficilement lorsque l'on veut rendre étanche les extrémités de la plaque qui sont disposées perpendiculaires à la direction des entretoises. En effet, dans ce cas-là, les lames, en se rapprochant, vont chauffer et ramollir la matière des plaques et des entretoises. La matière des entretoises va se répartir de façon non uniforme, ce qui aura pour conséquence d'obtenir un produit dont l'étanchéïté ne sera pas certaine ou dont l'état de surface au niveau de la soudure sera mauvais.

En outre, le procédé, appliqué sur les surfaces parallèles à la direction des entretoises présente l'inconvénient de réaliser un rebord au niveau de la ligne de jonction des deux lames chauffantes par la ligne de découpe. Il risque donc de former des aspérités qui nécessitent, soit une intervention ultérieure pour éviter que la partie soudée ne présente des aspérités, soit l'acceptation d'un mauvais état de surface.

Un autre procédé connu, et illustré par exemple par la demande de brevet européen 0288584, enseigne la fermeture des cellules des plaques alvéolaires en déplaçant le bord parallèle aux entretoises des plaques le long d'un outil chauffant conformé en gorge à section semi-circulaire pour rabattre les couvertures supérieure et inférieure l'une en direction de l'autre dans le but de former un bord arrondi.

Ce procédé permet de profiler les deux côtés latéraux parallèles au sens de déplacement de la plaque mais présente l'inconvénient de ne pas permettre de maîtriser correctement la répartition de la matière entre chaque bord et peut, de ce fait, amener à produire des plaques dont les bords sont bien fermés sur un côté et mal fermés de l'autre côté. En outre, le fait de pousser les plaques selon une direction parallèle à la soudure entraîne des problèmes d'adhésion de la matière en fusion sur les bords de l'outil et provoque certainement une accumulation de la matière à l'entrée de l'outil du côté amont de celui-ci par rapport au sens de déplacement des plaques.

Enfin, les procédés des deux documents antérieurs ne permettent d'obtenir que des soudures rectilignes sans que l'on puisse faire décrire à ces soudures des formes variées.

On connaît encore un procédé consistant à mettre en contact la barre de soudage avec le bord à souder. Cette barre présente une rainure à fond plat de largeur égale à l'épaisseur de la plaque qui est chauffé jusqu'à entraîner la fusion et le soudage entre eux des éléments constitutifs de la plaque. La mise en oeuvre d'une telle barre est difficile à cause notamment de la tendance au collage de la matirèe sur la barre après soudage.

Un premier but de l'invention est donc de proposer un procédé de fermeture des bords de plaques alvéolaires qui soit particulièrement avantageux pour les extrémités de cannelures et qui pallie les inconvénients de l'art antérieur.

Le procédé de fermeture de bord de plaques alvéolaires en matière thermoplastique au moyen d'une barre de soudage avec une rainure au profil déterminé, consistant à mettre ledit bord en contact avec la rainure, à chauffer la barre et l'avancer d'une profondeur déterminée de façon à souder et conformer le bord selon le profil de la rainure, et à retirer ensuite la barre de soudage, caractérisé en ce que la barre de soudage comporte un moyen évitant le collage de la matière thermoplastique aux parois de la rainure, facilitant ainsi son retrait après soudage et formage.

Selon une autre particularité, on met en oeuvre une barre de soudage pourvue d'un moyen de refroidissement. Il est ainsi possible d'amener rapidement la surface formée à une température à laquelle les risques de collage sont éliminés.

Le moyen de refroidissement consiste en un fluide de refroidissement circulant à l'intérieur de la barre de soudage après l'étape de soudage et formage.

Selon une autre particularité, l'étape de chauffage est assurée par un moyen de chauffage électrique. De préférence il s'agit d'un moyen de chauffage par effet joule par circulation d'un fluide après interruption du chauffage.

L'étape de chauffage est assurée au moyen d'un fluide de chauffage circulant à l'intérieur de la barre de soudage.

Selon une autre particularité, la barre de soudage est recouverte d'un produit anti-adhérant approprié ayant des propriétés facilitant le démoulage à chaud, et permettant, suivant la qualité du revêtement et de la qualité du soudage visée, de moins refroidir la barre de soudage, voire même de ne pas la refroidir du tout.

Un revêtement à base de polytétra-fluoréthylène convient pour cette application ainsi que le carbone diamant et en particulier le carbone diamant amorphe. Cette liste n'est pas limitative.

D'autres caractéristiques et avantages de la présente invention apparaîtront plus clairement à la lecture de la description ci-après faite en référence aux dessins annexés dans lesquels :
- les figures 1Aà 1E représentent les différentes étapes d'un procédé de soudage par rapprochement de la barre ;
- la figure 2 représente une vue en perspective d'une plaque alvéolaire et de la barre de soudage en vis-à-vis de cette plaque ;
- la figure 3 représente une vue schématique du dispositif de chauffage et de refroidissement de la barre de soudage ;
- la figure 4 représente une vue en coupe transversale de la barre de soudage ;
- la figure 5 représente un deuxième mode de réalisation d'une partie de la barre de soudage ;
- la figure 6A représente une vue en perspective d'un autre mode de réalisation d'une barre de soudage ;
- la figure 6B représente la vue en coupe de cette variante de réalisation ;
- la figure 7 représente schématiquement un deuxième mode de réalisation de circuit de chauffage et de refroidissement d'une barre de soudage selon le mode de réalisation de la figure 6.

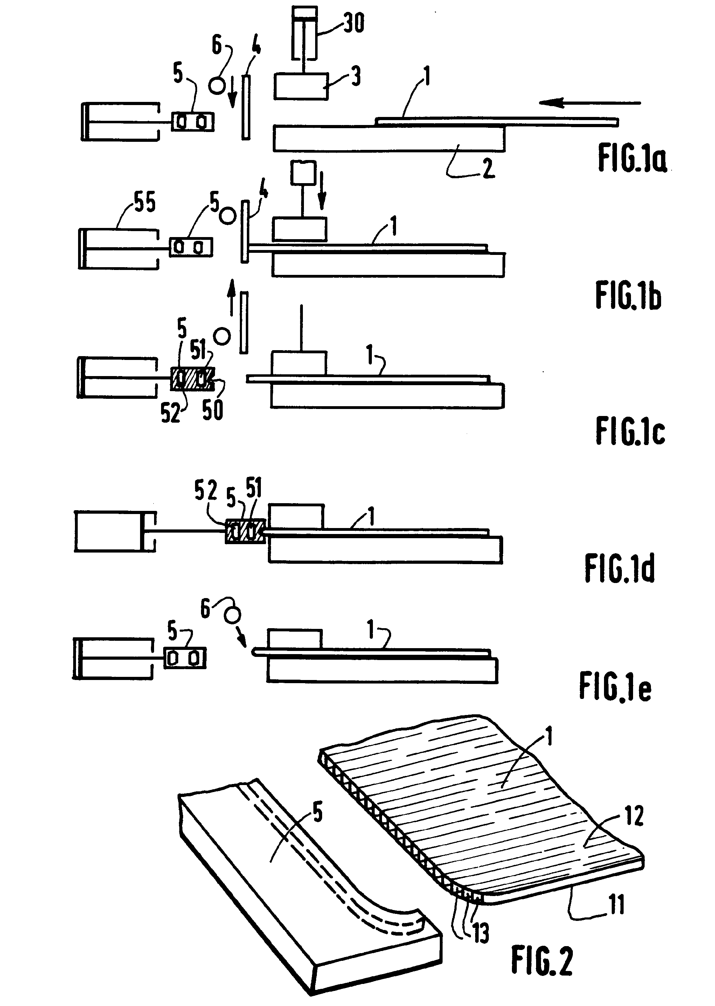

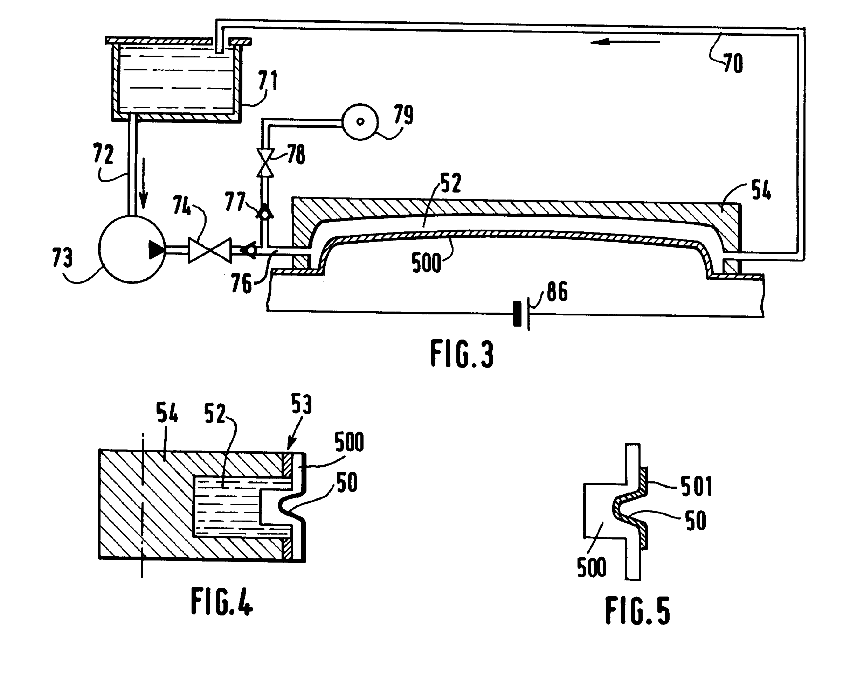

Les différentes étapes du procédé sont représentées à l'aide des figures 1Aet 1 E sur lesquelles on peut voir une plaque alvéolaire (1) amenée sur une table de soutien (2) par un convoyeur non représenté. Cette plaque alvéolaire (1), représentée à la figure 2, comporte une couverture supérieure (12), une couverture inférieure (11) et des entretoises (13) reliant la couverture inférieure (11) à la couverture supérieure (12). Une telle plaque (1) est réalisée par extrusion dans une matière telle que le polypropylène ou autre polyoléfine. Cette plaque (1), poussée par les rouleaux du convoyeur (non représenté), glisse sur la table et vient en butée contre un dispositif de butée (4), comme représenté à la figure 1B. Un bloc presseur (3) servant à l'immobilisation de la plaque sur la table (2) est actionné par un premier vérin (30), ou tout autre dispositif, pour venir en contact avec la plaque et appuyer celle-ci sur la table (2). Une fois le bloc presseur (3) mis en place pour appuyer la plaque (1) contre la table (2), la butée (4) est retirée au moyen d'un deuxième vérin (non représenté) qui permet de déplacer une butée (4) entre une position active où elle sert à arrêter les plaques et une position de retrait où elle est inactive. Le retrait de la butée est suffisant pour permettre le passage de la barre de soudage (5) qui est montée à l'extrémité d'un troisième vérin (55). Celui-ci permet le déplacement de la barre de soudage (5) dans un plan parallèle au plan de la table (2) et en direction de la plaque (1), de façon à appliquer la gorge (50), (représentée à la figure 1 C, en forme de U sur la face avant du bloc de soudage) avec une pression déterminée sur l'extrémité de la plaque (1) perpendiculaire aux entretoises (13). Le bloc de soudage (5) comporte, comme représenté aux figures 1 C et 1 D, dans une première forme de réalisation de l'invention, un canal (51) d'amenée de fluide de chauffage et un canal (52) d'amenée de fluide de refroidissement, chacun des canaux pouvant, dans cette réalisation, être indépendant de façon à avoir des circuits de circulation de fluide de chauffage et de refroidissement séparés. La barre de soudage (5) est appliquée au cours de l'étape suivante, représentée à la figure 1 D, avec une pression déterminée sur l'extrémité de la plaque (1). Cette barre de soudage est, dans un premier temps, élevée à une température donnée, située aux environs de 250°C, de façon à provoquer la fusion, le formage et le soudage des extrémités de la plaque selon la forme du profil de l'outil constitué par la rainure ou gorge (50). La pression avec laquelle l'outil est appliqué et la distance sur laquelle on fait avancer l'outil dépendent de conditions de fonctionnement qui sont déterminées en fonction de l'épaisseur des plaques (1), des entretoises (13) et des couvertures (11, 12) constituant les plaques. Ces conditions sont déterminées de façon à former un bord soudé étanche sans pour autant déformer les surfaces supérieure (12) et inférieure (11) de la plaque par des bourrelets.

Lorsque la fusion et le soudage ont été effectués, un fluide de refroidissement est mis en circulation dans le canal (52) du fluide de refroidissement pendant un temps suffisant pour refroidir l'outil à une température comprise, environ, entre 60 et 100°C, de façon à figer le bord traité avant démoulage et éviter ainsi le collage du bord soudé sur l'outil au moment du démoulage. Après un temps d'attente, la rampe de soudage (5) est reculée à l'aide du troisième vérin (55) pour l'amener dans la position de retrait représentée à la figure 1 E. La rampe de soufflage (6) est ensuite mise en fonctionnement, le cas échéant, pour assurer le refroidissement définitif de l'extrémité de la plaque (1), éviter la formation de bulles et solidifier plus rapidement la soudure. Après retrait du bloc presseur (3), la plaque est évacuée et entraînée par un convoyeur ou prise par un dispositif de préhension. Lorsque l'on souhaite fermer les deux extrémités sur lesquelles débouchent les canaux formés par les entretoises (13), la plaque (1) est retournée par un dispositif de préhension de façon à traiter l'autre bord de la plaque formant l'extrémité perpendiculaire aux directions des entretoises (13).

Le dispositif de l'invention permet de conformer la barre de soudage selon des formes curvilignes. Ainsi, cette barre de soudage peut, à chacune de ses extrémités, prendre des formes arrondies de façon à arrondir la soudure aux angles de la plaque, comme représenté à la figure 2. Dans ce cas, la barre de soudage a un profil de dessus correspondant substantiellement à un U. Il est bien évident que la forme de la barre de formage, vue de dessus, peut être constituée selon toute forme curviligne souhaitée pour les besoins de l'utilisation de la plaque. En obturant ainsi de façon correcte les extrémités des plaques, on peut réaliser des plaques étanches dont les bords arrondis sont dépourvus d'aspérités et dont les coins arrondis permettent une manipulation qui évite toute possibilité de blessure ou d'endommagement des films plastiques d'emballage dans le cas où ces plaques sont utilisées comme intercalaires de bouteilles chez les verriers pour permettre la palettisation. Ces plaques intercalaires rendues totalement étanches peuvent être utilisées plusieurs fois et nettoyées dans une laveuse sans que les inconvénients connus par l'art antérieur se produisent.

Le procédé permet de traiter les bords perpendiculaires aux cannelures mais également les bords parallèles. Ce procédé peut s'appliquer à toutes les plaques alvéolaires quelle que soit leur utilisation ultérieure, et peut également s'appliquer à de la plaque pleine pour obtenir un formage des bords dans le but de les adoucir ou de leur donner un profil particulier.

La barre de soudage (5) est de préférence revêtue d'un produit ayant des propriétés facilitant le démoulage à chaud, et permettant, suivant la qualité du revêtement et de la qualité du soudage visés, de moins la refroidir voire même de ne pas la refroidir du tout.

On choisit le revêtement de façon qu'il résiste à la température à laquelle on opère le soudage. Il pourra s'agir d'un revêtement connu à base de poly- tétrafluoreéthylène (PTFE) appliqué par exemple par pulvérisation en couche de quelques centièmes de millimètres ou bien à base de carbone diamant, le carbone diamant amorphe (appelé également carbone amorphe diamantin) en particulier.

Pour ce dernier un mode d'application par voie thermochimique en phase gazeuse connu (Chemical Vapor Deposition) consiste à disposer la barre sur un support conducteur dans une enceinte après l'avoir convenablement décapée. La couche de revêtement est obtenue par décharge électrique radiofréquence dans un mélange de gaz hydrocarboné et de gaz dopants appropriés. Une couche de 2 à 3 microns d'épaisseur convient, elle présente un très faible coefficient de frottement en étant stable à la température requise par le soudage.

Un autre produit pour la formation du revêtement est le nitrure de titane dopé au PTFE en couche de 1 à 4 microns.

Il est important de remarquer qu'au cours du cycle la plaque (1) à traiter doit être positionnée par rapport à l'outil de façon précise et maintenue par le bloc presseur (3) de façon suffisamment efficace pour rester en position malgré les efforts appliqués par le bloc de soudage (5) pendant l'opération de formage qui consiste à refouler la matière.

La figure 3 représente un autre mode de réalisation de la barre de soudage (5) qui permet un chauffage par effet joule et un refroidissement par circulation d'un fluide dans un canal (52) formé entre le corps (54) de la barre et une semelle (500) constituant le profil de formage des côtés des plaques.

Comme représenté à la figure 4, le bloc (54) est pourvu d'un évidement longitudinal (52) constituant le canal dans lequel circule le fluide de refroidissement, les extrémités de l'évidement sont obtenues par la face arrière de la semelle (500) et le bloc (54). Cette semelle (500) comporte, en son centre, la rainure (50) qui donne à l'extrémité des plaques (1) le profil souhaité pour la section de la soudure.

Dans la variante de réalisation selon la figure 5, la partie active (500) est constituée d'un premier matériau. Dans la rainure (50) est projeté un deuxième matériau (501) dans lequel circule le courant fourni par un générateur (86) de courant de grande intensité sous faible tension. Ce courant provoque par effet joule le chauffage de la barre (5). Le système de refroidissement est constitué par la circulation d'un fluide réfrigéré contenu dans un réservoir (71) et alimentant par une canalisation (72) une pompe (73). Cette pompe (73) alimente à travers une première électrovanne (74) et un premier clapet anti-retour (75) l'entrée du canal de refroidissement (52) de la barre de soudage (5). Le clapet (75) est relié par une portion de tube (76) à l'entrée du canal (52). Cette portion de tube (76) est reliée par une dérivation à un deuxième clapet anti-retour (77) qui est lui-même relié à une deuxième électrovanne (78) ; cette électrovanne (78) est elle-même reliée à un réservoir d'air comprimé (79). Le dispositif permet ainsi, en commandant les électrovannes (74) et (78), d'alimenter la barre de formage (5) en fluide de refroidissement puis de chasser le fluide de refroidissement par l'air comprimé avant de redéclencher un cycle de chauffage de la barre.

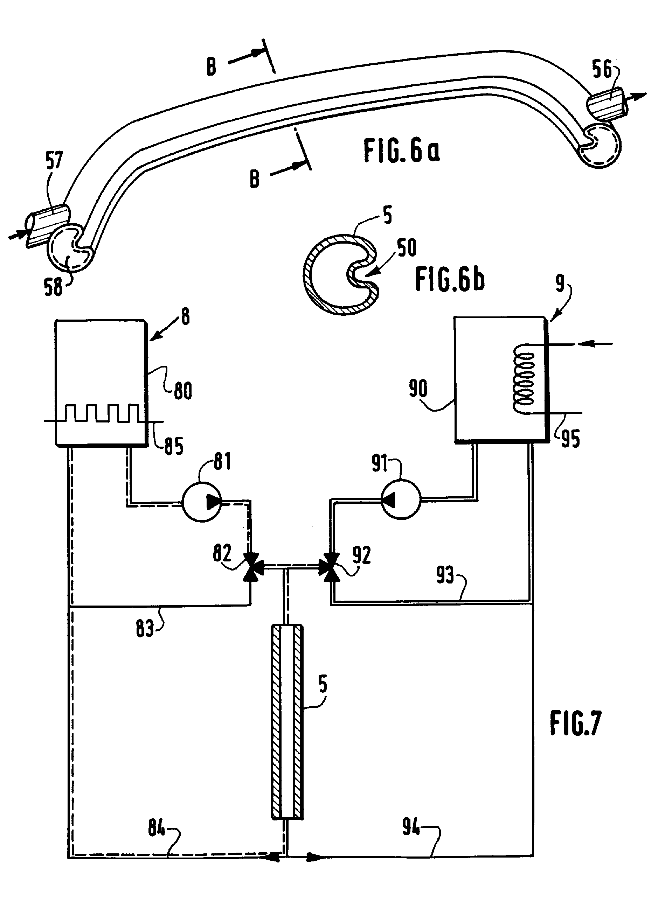

Dans un deuxième mode de réalisation de la barre de soudage (5), celle-ci peut être constituée d'un tube (5) dont la section a été déformée et refoulée vers l'intérieur de façon à former une gorge (50), comme représenté sur la figure 6B. Ce tube (5), conformé en U, est obstrué à chacune de ses extrémités par une rondelle (58), et sur les branches du U sont soudés des manchons (57) d'amenée du fluide et (56) d'évacuation du fluide qui communiquent avec l'intérieur du tube par des perçages. Dans le mode de réalisation selon la figure 6, la barre de soudage peut être utilisée avec un dispositif de chauffage et de refroidissement par fluide, comme représenté à la figure 7.

Le dispositif de chauffage et de refroidissement par fluide représenté à la figure 7 est constitué d'un circuit de fourniture d'un fluide chaud et d'un circuit de fourniture d'un fluide froid. Le circuit de fluide chaud comporte un réservoir (80) alimentant une pompe (81), laquelle est reliée à un distributeur (82) qui permet d'envoyer le fluide soit vers l'entrée du fluide chaud de la barre de soudage (5), soit vers une canalisation (83) de retourdu fluide au réservoir. La sortie d'évacuation de la barre (5) est reliée par une canalisation (84) au réservoir (80) de fluide chaud. Ce réservoir (80) contenant le fluide est chauffé à l'aide d'une résistance (85). Le circuit de fourniture de fluide froid est identique au circuit de fourniture de fluide chaud et comporte un réservoir (90), un pompe (91), un dispositif de répartition (92), une canalisation de retour (93) au réservoir (90) et une canalisation (94) reliant la sortie d'évacuation de la barre (5) vers le réservoir. A la seule différence d'avec le circuit de fourniture du fluide chaud, le circuit de fourniture de fluide froid comporte un serpentin (95) alimenté en eau froide.

D'autres variantes de réalisation de la barre de soudage pourraient comprendre un chauffage par induction ou un chauffage par rayonnement infrarouge et un dispositif de refroidissement par contact à l'aide de pièces refroidies qui viendraient en contact avec l'outil pour le refroidir ou une combinaison de l'un des modes de chauffage exposés avec l'un des modes de refroidissement exposés.

D'autres modifications à la portée de l'homme de métier font également partie de l'esprit de l'invention.

## Revendications

1) Procédé de fermeture de bord de plaques alvéolaires en matière thermoplastique au moyen d'une barre de soudage avec une rainure au profil déterminé, consistant à mettre ledit bord en contact avec la rainure, à chauffer la barre et l'avancer d'une profondeur déterminée de façon à souder et conformer le bord selon le profil de la rainure, et à retirer ensuite la barre de soudage, caractérisé en ce que la barre de soudage comporte un moyen évitant le collage de la matière thermoplastique aux parois de la rainure, facilitant ainsi son retrait après soudage et formage.

2) Procédé selon la revendication 1 caractérisé en ce que ledit moyen consiste en un moyen de refroidissement.

3) Procédé selon la revendication 2 caractérisé en ce que le moyen de refroidissement consiste en un fluide de refroidissement circulant à l'intérieur de la barre de soudage après l'étape de soudage et formage.

4) Procédé selon l'une des revendications 1 à 3 caractérisé en ce que l'étape de chauffage est assurée par un moyen de chauffage électrique.

5) Procédé selon l'une des revendications 1 à 3 caractérisé en ce que l'étape de chauffage est assurée au moyen d'un fluide de chauffage circulant à l'intérieur de la barre de soudage.

6) Procédé selon la revendication 1 caractérisé en ce que ledit moyen consiste en un revêtement anti-adhérant approprié de la partie de la barre de soudage venant au contact du bord de la plaque.

7) Procédé selon la revendication 6 caractérisé en ce que ledit revêtement est à base de polytétra-fluoréthylène (PTFE).

8) Procédé selon la revendication 6 caractérisé en ce que ledit revêtement est à base de carbone diamant en particulier le carbone diamant amorphe.

9) Procédé selon l'une des revendications 1 à 5 caractérisé en ce que la barre comporte en outre un revêtement selon l'une des revendications 6 à 8.
